# EUROPÄISCHE PATENTANMELDUNG

(11) **EP 4 560 169 A1**
(43) Veröffentlichungstag der Anmeldung: **28.05.2025**
(21) Anmeldenummer: 24211562.4
(22) Anmeldetag: 07.11.2024
(51) Int. Cl.: F16L 11/12, F16L 33/207

(54) **VERBINDUNGSANORDNUNG**

(30) Priorität: 23.11.2023 DE 102023211687
(71) Anmelder: ContiTech Techno-Chemie GmbH, 61184 Karben (DE)
(72) Erfinder: Kreidner, Harald, 34346 Hann. Münden (DE)
(74) Vertreter: Preusser, Andrea

(57) **Zusammenfassung**

Die Erfindung betrifft eine Verbindungsanordnung (10) mit einem Nippel (20), einem Schlauch (30) und einer Presshülse (40), wobei ein Endabschnitt (31) des Schlauches (30) in einer Aufschubrichtung (AR) auf den Nippel (20) aufgeschoben und mittels der Presshülse (40) an zumindest einer Verpressstelle (41, 42, 43) auf den Nippel (20) abdichtend verpresst ist. Es wird vorgeschlagen, dass eine äußere Schicht (32) des Schlauches (30) im Endabschnitt (31) mit zumindest einer ringförmigen Umfangsnut (33, 34, 35) versehen wird.

## Beschreibung

Die vorliegende Erfindung betrifft eine Verbindungsanordnung mit einem Nippel, einem Schlauch und einer Presshülse, wobei ein Endabschnitt des Schlauches in einer Aufschubrichtung auf den Nippel aufgeschoben und mittels der Presshülse an zumindest einer Verpressstelle auf den Nippel abdichtend verpresst ist.

Bei derartigen Verpress- bzw. Crimpverbindungen ist kann es aufgrund von Toleranzen beim Außendurchmesser des Schlauches notwendig sein, die äußere Schicht am Schlauchende teilweise zu schleifen oder abzuschälen, insbesondere ohne die darunterliegenden Schichten freizulegen, um das geforderte Nennmaß für die Verbindung herzustellen. Hierbei besteht häufig das Problem, die exakt richtige Menge an Material abzutragen. Denn wird zu viel Material abgeschält, ist die benötigte Zugfestigkeit der Verbindung nicht mehr gegeben. Wird zu wenig Material abgeschält, kann das durch das Verpressen komprimierte Material zu Beschädigungen in den weiter innen liegenden Schlauchschichten führen.

Aufgabe der vorliegenden Erfindung ist es, eine Verbindungsanordnung der eingangs genannten Art bereitzustellen, bei der Toleranzen der Außendurchmessers des Schlauches besser ausgeglichen werden können.

Diese Aufgabe wird durch eine Verbindungsanordnung mit den Merkmalen des Anspruchs 1 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Die erfindungsgemäße Verbindungsanordnung Verbindungsanordnung weist einen Nippel, einen Schlauch und eine Presshülse auf. Ein Endabschnitt des Schlauches ist in einer Aufschubrichtung auf den Nippel aufgeschoben und mittels der Presshülse an zumindest einer Verpressstelle auf den Nippel abdichtend verpresst, z.B. gecrimpt. Die erfindungsgemäße Verbindungsanordnung zeichnet sich dadurch aus, dass im Endabschnitt eine äußere Schicht des Schlauches zumindest eine ringförmige Umfangsnut aufweist.

Der Erfindung liegt die Idee zugrunde, dass das Material des äußeren Schlauches in Form der einen oder mehreren ringförmigen Umfangsnuten abgetragen wird. Die Umfangsnuten bilden daher Hohlräume bzw. Kavitäten in der äußeren Schicht. Wenn der Endabschnitt des Schlauches unter Freilassen der durch die ringförmigen Umfangsnuten gebildeten Kavitäten auf den Nippel verpresst wird, kann im Zuge des Verpressvorgangs zumindest ein Teil des an die Umfangsnuten angrenzenden Materials der äußeren Schicht zumindest teilweise in die Kavitäten hinein ausweichen. Auf diese Weise wird im Bereich der Umfangsnuten der Druck im Material verringert und so beispielsweise eine gleichmäßigere Spannungsverteilung erreicht, die die Zugfestigkeit der Verbindung begünstigt und bei mehrschichtigen Schläuchen verhindert, dass innenliegende Schichten beschädigt werden. In anderen Worten kann die auftretende Maximalspannung an ausgewählten Stellen der Verbindung verringert und so eine Verbindungsanordnung mit erhöhter maximaler Haltekraft bereitgestellt werden.

Die Umfangsnuten sind in die äußere Oberfläche der äußeren Schicht eingebracht, z.B. durch Abschälen der äußeren Schicht, insbesondere ohne die darunterliegenden Schichten freizulegen. In anderen Worten ist die in radialer Richtung gemessenen Tiefe der zumindest einen Umfangsnut vorzugsweise kleiner als die in derselben Richtung gemessene Schichtdicke der äußeren Schicht. Insbesondere ist der Querschnitt der Umfangsnut rechteckig.

Der Schlauch bildet eine flexible und im Wesentlichen zylindrische Medienleitung. Bevorzugt ist der Schlauch mehrschichtig. Bevorzugt besteht die äußere Schicht des Schlauches aus einem Werkstoff, der insbesondere zu größer gleich 50 Vol.-% ein Elastomer enthält. Der Schlauch kann mittels Druck- bzw. Festigkeitsträgern verstärkt sein. Die Druckträger können eine unterhalb der äußeren Schicht angeordnete Schicht des Schlauches bilden oder in eine unterhalb der äußeren Schicht angeordnete Schicht des Schlauches eingebettet sein. Die Druckträger können in Form von auf eine innere Schicht des Schlauches gewebten oder spiralisierten Garnen vorgesehen sein. Die Druckträger können aus einem Werkstoff bestehen, der Kunststoff und/oder Metall enthält.

Im zusammengesetzten Zustand der Verbindungsanordnung ist der Nippel radial innenliegend im Schlauch und die Presshülse radial außenliegend an dem Schlauch positioniert. Hierbei definiert die Längsmittelachse des Schlauches eine axiale Richtung bzw. Längsrichtung der Verbindungsanordnung. Insbesondere entspricht die axiale Richtung der für ein durch die Verbindungsanordnung hindurch zu förderndes gasförmiges, flüssiges und/oder pastöses Medium vorgesehenen Förderrichtung.

Der Nippel kann Teil eines Fittings, Teil eines Anschlussstutzens eines Aggregates oder Teil einer weiteren Fluidleitung, wie z.B. eines Rohres, sein. Der Nippel ist vorzugsweise zumindest abschnittsweise zylindrisch ausgebildet. Der Nippel kann an seiner für den Kontakt mit dem Schlauch vorgesehenen äußeren Oberfläche in bekannter Weise mit einer Profilierung, z.B. in Form von umlaufenden Erhöhungen oder Vertiefungen, versehen sein. Der Nippel besteht bevorzugt aus einem Werkstoff, der ein Metall enthält.

Die Presshülse besteht bevorzugt aus einem Werkstoff, der ein Metall enthält. Die Presshülse kann auf ihrer inneren Oberfläche auch zahnartige Verpressglieder aufweisen. Die Presshülse ist vorzugsweise zumindest abschnittsweise zylindrisch ausgebildet.

Die Presshülse weist eine oder mehrere Verpressstellen auf, an denen die Presshülse in Richtung des Nippels plastisch verformt ist, um den Schlauch auf den Nippel abdichtend zu verpressen. Als Verpressstelle wird hierbei insbesondere die Mitte bzw. der Scheitelpunkt der Vertiefung eines sich in axialer Richtung erstreckenden Verpressbereiches definiert, der beispielsweise durch ein einziges Verpressglied eines Verpresswerkzeugs herstellbar ist.

In einer bevorzugten Ausführungsform der erfindungsgemäßen Verbindungsanordnung ist eine in axialer Richtung gemessene Breite der zumindest einen Umfangsnut größer oder gleich einer in radialer Richtung gemessenen Tiefe der zumindest einen Umfangsnut ist. Derartig gestaltete Umfangsnuten zeigen vorteilhafte Eigenschaften zur Reduzierung von Spannungsspitzen im Schlauchmaterial und sind zudem in einfacher Weise herstellbar. Hervorragende Ergebnisse konnten erzielt werden, wenn die Breite der zumindest einen Umfangsnut um den Faktor 2 bis 4, bevorzugt um den Faktor 2,5 bis 3,5, größer ist als deren Tiefe.

In einer bevorzugten Ausführungsform der erfindungsgemäßen Verbindungsanordnung weist die äußere Schicht des Schlauches zumindest zwei in axialer Richtung voneinander beabstandete Umfangsnuten auf. Auf diese Weise kann eine noch gleichmäßigere Spannungsverteilung entlang des Endabschnitts des Schlauches erreicht werden. Insbesondere ist der Schlauch an zumindest zwei in axialer Richtung voneinander beabstandeten Verpressstellen der Presshülse auf dem Nippel verpresst ist. Es hat sich als vorteilhaft erwiesen, wenn die Anzahl der Verpressstellen und die Anzahl der Umfangsnuten nah beieinanderliegen. Vorzugsweise unterscheidet ist die Anzahl der Umfangsnuten von der Anzahl der Verspressstellen um höchstens 1. Besonders bevorzugt ist die Anzahl der Umfangsnuten gleich der Anzahl der Verspressstellen.

In einer bevorzugten Ausführungsform der erfindungsgemäßen Verbindungsanordnung weist der Nippel an einer Außenseite zumindest ein ringförmiges Dichtungselement, insbesondere eine O-Ring-Dichtung, zum Abdichten des Nippels gegen eine Innenfläche des Schlauches auf, wobei ein Dichtbereich des Dichtungselements der Verpressstelle oder einer der mehreren Verpressstellen gegenüberliegend angeordnet ist. Das gegenüber der Verspressstelle angeordnete Dichtungselement bewirkt in Verbindung mit der oder den Umfangsnuten eine weitergehende Verringerung von Spannungsspitzen im Schlauchmaterial und begünstigt somit eine langlebigere dichte Verbindung. Bevorzugt entspricht die Anzahl der Dichtungselemente der Anzahl der Verpressstellen, wobei der jeweilige Dichtbereich eines jeden Dichtungselements einer der Verpressstellen gegenüberliegend angeordnet ist. In anderen Worten ist jeder Verpressstelle ein Dichtungselement zugeordnet, das der an der jeweiligen Verspressstelle auftretenden (Maximal-)Spannung entgegenwirkt.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des unabhängigen Anspruchs kombinierbar sind.

Abwandlungen und Ausgestaltungen der Erfindung sowie weitere Vorteile und Einzelheiten der Erfindung lassen sich der nachfolgenden gegenständlichen Beschreibung und der Zeichnungen entnehmen. In der schematischen Figur zeigt:
- Fig. 1: Ein Ausführungsbeispiel einer erfindungsgemäßen Verbindungsanordnung in einer Schnittdarstellung; und
- Fig. 2: eine Detailansicht eines Ausschnitts aus Fig. 1.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

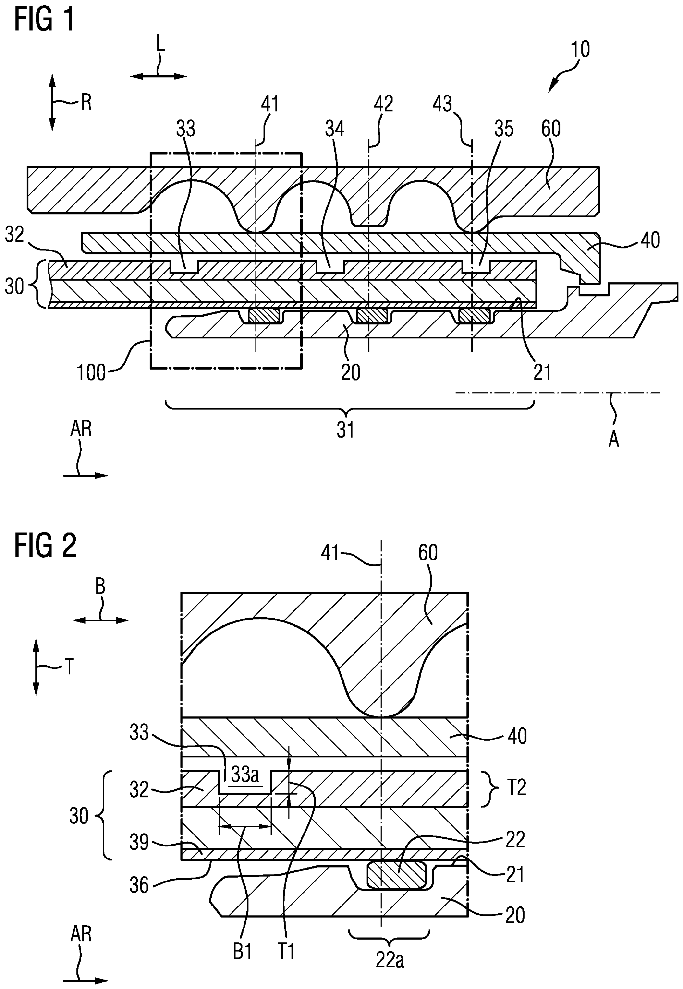

Fig. 1 zeigt ein Ausführungsbeispiel einer Verbindungsanordnung 10 in einem nicht verpressten Zustand. Die Verbindungsanordnung weist einen Nippel 20, einen Schlauch 30 und eine Presshülse 40 auf. Die Längsmittelachse A des Schlauches 30 definiert eine axiale Richtung bzw. Längsrichtung L sowie eine radiale Richtung R der Verbindungsanordnung 10. Es ist ferner ein Verpresswerkzeug 60 gezeigt, dessen drei Verpressglieder jeweils eine Verpressstelle 41, 42, 43 definieren. Das Verpresswerkzeug 60 ist lediglich zu Anschauungszwecken abgenildet und ist kein Bestandteil der Erfindung. Ein Endabschnitt 31 des Schlauches 30 ist in einer Aufschubrichtung AR auf den Nippel 20 aufgeschoben. In einem (nicht gezeigten) verpressten Zustand der Verbindungsanordnung 10 ist der Endabschnitt mittels der Presshülse 40 an den Verpressstelle 41, 42, 43 auf den Nippel 20 abdichtend verpresst. Eine äußere Schicht 32 des Schlauches 30 weist drei ringförmige Umfangsnut 33, 34, 35 auf, die in die radial äußere Oberfläche der äußeren Schicht 32. Die Umfangsnuten 33, 34, 35 bilden zumindest im unverpressten Zustand der Verbindungsanordnung 10 Hohlräume bzw. Kavitäten 33a (siehe Fig. 2) in der äußeren Schicht 32, in die während des Verpressvorgangs ein Teil des an die Umfangsnuten 33, 34, 35 angrenzenden Materials der äußeren Schicht 32 zumindest teilweise hinein ausweichen kann. Auf diese Weise wird im Bereich der Umfangsnuten 33, 34, 35 der Druck im Material verringert und so eine gleichmäßigere Spannungsverteilung erreicht. Gleichzeitig wird eine gegebenenfalls vorhandene innere Schicht 39 (Fig. 2) enthaltend einen Thermoplasten vor Beschädigung geschützt.

Im vorliegenden Fall sind zwar drei Verpressstellen 41, 42, 43 sowie drei Umfangsnuten 33, 34, 35 gezeigt, die erfindungsgemäßen Vorteile sind aber ersichtlich auch mit einer oder mehreren Verpressstellen sowie einer oder mehreren Umfangsnuten realisierbar. Es hat sich als vorteilhaft erwiesen, wenn die Anzahl der Verpressstellen 41, 42, 43 und die Anzahl der Umfangsnuten 33, 34, 35 nah beieinanderliegen, bevorzugt wie im vorliegenden Fall gleich sind. Auf diese Weise kann jeder Verpressstelle 41, 42, 43 eine Umfangsnut 33, 34, 35 zugeordnet werden. Je nach Anwendungsfall kann eine Umfangsnut 33, 34, 35 ihrer zugeordneten Verpressstelle 41, 42, 43 gegenüberliegend angeordnet sein oder zu dieser entgegen oder in Aufschubrichtung AR versetzt angeordnet sein.

Der Nippel 20 weist an einer Außenseite 21 zumindest ein ringförmiges Dichtungselement 22, insbesondere eine O-Ring-Dichtung, zum Abdichten des Nippels 20 gegen eine Innenfläche 36 des Schlauches 30 auf. Wie besonders gut in Fig. 2 erkennbar ist, ist ein Dichtbereich- 22a des Dichtungselements 22 der Verpressstelle 41 gegenüberliegend angeordnet, d.h. in Längsrichtung L überlappt die Verpressstelle 41 mit dem Dichtbereich 22a. Die gegenüber den Verspressstellen 41, 42, 43 angeordneten Dichtungselemente bewirken in Verbindung mit der oder den Umfangsnuten 33, 34, 35 eine weitergehende Verringerung von Spannungsspitzen im Schlauchmaterial. Es hat sich als vorteilhaft erwiesen, wenn die Anzahl der Dichtungselemente der Anzahl der Verpressstellen 41, 42, 43 entspricht. Die erfindungsgemäßen Vorteile sind grundsätzlich aber auch mit einer anderen Anzahl an Dichtungselementen realisierbar.

Mit Blick auf Fig. 2, die den Ausschnitt 100 aus Fig. 1 im Detail zeigt, ist die in radialer Richtung R gemessenen Tiefe T1 der Umfangsnuten 33, 34, 35 kleiner als die in derselben Richtung gemessene Schichtdicke T2 der äußeren Schicht 32. Auf diese Weise wird die äußere Schicht 32, die bevorzugt ein Elastomer enthält, im Bereich der Umfangsnut 33 nicht vollständig abgeschält, was die Festigkeit der Pressverbindung begünstigt.

Es hat sich gezeigt, dass sich gute Ergebnisse bei der Reduzierung von Spannungsspitzen im Schlauchmaterial erzielen lassen, wenn die in axialer Richtung gemessene Breite B1 der Umfangsnut 33 größer oder gleich ihrer in radialer Richtung gemessenen Tiefe T1 ist. Eine solche insbesondere mit einem rechteckigen Querschnitt versehene Umfangsnut 33 ist zudem in einfacher Weise herstellbar. Hervorragende Ergebnisse konnten erzielt werden, wenn die Breite B1 der zumindest einen Umfangsnut 33 um den Faktor 2 bis 4, bevorzugt um den Faktor 2,5 bis 3,5, größer ist als deren Tiefe T1.

Insgesamt wird mit der vorliegenden Erfindung eine Verbindungsanordnung 10 geschaffen, mit der Spannungsspitzen, welche die Festigkeit der Verbindung zwischen dem Schlauch auf der einen Seite und dem Nippel sowie der Presshülse auf der anderen Seite beeinträchtigen, mit geringem Aufwand effektiv entgegengewirkt werden kann.

Der Schutzbereich der vorliegenden Erfindung ist durch die Patentansprüche gegeben und wird durch die in der Beschreibung erläuterten oder der Figur gezeigten Merkmale nicht beschränkt.

## Patentansprüche

1. Verbindungsanordnung (10) mit einem Nippel (20), einem Schlauch (30) und einer Presshülse (40),
wobei ein Endabschnitt (31) des Schlauches (30) in einer Aufschubrichtung (AR) auf den Nippel (20) aufgeschoben und mittels der Presshülse (40) an zumindest einer Verpressstelle (41, 42, 43) auf den Nippel (20) abdichtend verpresst ist,
**dadurch gekennzeichnet, dass**
im Endabschnitt (31) eine äußere Schicht (32) des Schlauches (30) zumindest eine ringförmige Umfangsnut (33, 34, 35) aufweist.

2. Verbindungsanordnung (10) nach Anspruch 1, wobei eine in axialer Richtung (A) gemessene Breite (B1) der zumindest einen Umfangsnut (33, 34, 35) größer oder gleich einer in radialer Richtung (R) gemessenen Tiefe (T1) der zumindest einen Umfangsnut (33, 34, 35) ist.

3. Verbindungsanordnung (10) nach Anspruch 2, wobei die Breite (B1) der zumindest einen Umfangsnut (33, 34, 35) um den Faktor 2 bis 4, bevorzugt um den Faktor 2,5 bis 3,5, größer ist als deren Tiefe (T1).

4. Verbindungsanordnung (10) nach einem der vorstehenden Ansprüchen, wobei die äußere Schicht (32) des Schlauches (30) zumindest zwei in axialer Richtung (A) voneinander beabstandete Umfangsnuten (33, 34, 35) aufweist, insbesondere wobei der Schlauch (30) an zumindest zwei in axialer Richtung (A) voneinander beabstandeten Verpressstellen (41, 42, 43) der Presshülse (40) auf dem Nippel (20) verpresst ist.

5. Verbindungsanordnung (10) nach einem der vorangehenden Ansprüche, wobei der Nippel (20) an einer Außenseite (21) zumindest ein ringförmiges Dichtungselement (22, 23, 24) zum Abdichten des Nippels (20) gegen eine Innenfläche (36) des Schlauches (30) aufweist, wobei ein Dichtbereich (22a) des Dichtungselements (22, 23, 24) der Verpressstelle (41, 42, 43) oder einer der Verpressstellen (41, 42, 43) gegenüberliegend angeordnet ist.

6. Verbindungsanordnung (10) nach Anspruch 5, wobei die Anzahl der Dichtungselemente (22, 23, 24) der Anzahl der Verpressstellen (41, 42, 43) entspricht, wobei der jeweilige Dichtbereich (22a) eines jeden Dichtungselements (22, 23, 24) einer der Verpressstellen (41, 42, 43) gegenüberliegend angeordnet ist.
